**Europäisches Patentamt**

**European Patent Office**

**Office européen des brevets**

(19)

(11) Veröffentlichungsnummer: **0 142 603**
**A1**

(12) # EUROPÄISCHE PATENTANMELDUNG

(21) Anmeldenummer: **84106552.7**

(22) Anmeldetag: **07.06.84**

(51) Int. Cl.⁴: **B 01 D 1/30**

(30) Priorität: **27.08.83 DE 8324619 U**

(43) Veröffentlichungstag der Anmeldung:
**29.05.85 Patentblatt 85/22**

(84) Benannte Vertragsstaaten:
**AT CH FR GB IT LI**

(71) Anmelder: **DORNIER SYSTEM GmbH**
**Postfach 1360**
**D-7990 Friedrichshafen(DE)**

(72) Erfinder: **Wahl, Klaus, Dipl.-Ing.**
**Fitzenweiler Strasse 11**
**D-7778 Markdorf(DE)**

(72) Erfinder: **Reinhard, Fred, Dr.-Ing.**
**c/o Douglas American Inc. 3520 Xenwood Avenue SO**
**St. Louis Park, MN 55416(US)**

(72) Erfinder: **Schubert, K.-Peter, Dr.-Ing.**
**Haus 17**
**D-7778 Markdorf-Reute(DE)**

(74) Vertreter: **Landsmann, Ralf, Dipl.-Ing.**
**Kleeweg 3**
**D-7990 Friedrichshafen 1(DE)**

(54) **Vorrichtung zur Aufkonzentrierung von wässrigen Lösungen.**

(57) Zur Aufkonzentrierung von wässrigen Lösungen aus Galvanotechnik, Phototechnik und anderen Produktionsprozessen als Prozeßstufe zum Recycling oder zur Rückstandsbeseitigung wird eine Vorrichtung vorgeschlagen, welche besteht aus einem Rieselturm (6) mit einem in seiner oberen Hälfte angeordneten Rieselboden (13), einem darüber angeordneten Demister (14), einer in seiner unteren Hälfte angeordneten Lochplatte (11), einem darunter angeordneten Schrägboden (10), zwischen Rieselboden und Schrägboden eingelagerten Füllkörpern (12), einem ausserhalb des Rieselturmes befindlichen Gebläse (16) mit zwischen Lochplatte und Schrägboden angeordneten Lufteinlauf (15) und einem unterhalb des Rieselturmes angeordneten in einen Vorlagebehälter (2) und einen Konzentratbehälter (4) unterteilten Behältnis, einer Leitung (7) vom Schrägboden zum Konzentratbehälter und einer Leitung (8) mit Pumpe (18) vom Vorlagebehälter zum Rieselboden. Dabei bestehen Rieselturm, Füllkörper, Rieselboden, Lochplatte, Schrägboden, Behältnis und Leitungen aus einem gegen aggressiv wirkende Stoffe (z.B. Chromsäure) für Temperaturen bis ca. 80° C resistentem Material.

./...

Croydon Printing Company Ltd.

0142603

DORNIER SYSTEM GMBH

7990 Friedrichshafen

Reg. S 451 Gm

Vorrichtung zur Aufkonzentrierung von wässrigen Lösungen

Die Neuerung betrifft eine Vorrichtung zur Aufkonzentrierung von wässrigen Lösungen aus Galvanotechnik, Phototechnik und anderen Produktionsprozessen als Prozeßstufen zum Recycling oder zur Rückstandsbeseitigung, bestehend aus einem Rieselturm mit einem in seiner oberen Hälfte angeordneten Rieselboden, einem darüber angeordneten Demister, einer in seiner unteren Hälfte angeordneten Lochplatte, einem darunter angeordneten Schrägboden, zwischen Rieselboden und Schrägboden eingelagerten Füllkörpern, einem ausserhalb des Rieselturmes befindlichen Gebläse mit zwischen Lochplatte und Schrägboden angeordnetem Lufteinlauf und einem unterhalb des Rieselturmes angeordneten in einen Vorlagebehälter und einen Konzentratbehälter unterteilten Behältnis, einer Leitung vom Schrägboden zum Konzentratbehälter und einer Leitung mit Pumpe vom Vorlagebehälter zum Rieselboden.

0142603

In zahlreichen industriellen Produktionsprozessen entstehen durch Verschleppung von Prozessbädern sowie durch anschliessende Wasch- und Spülvorgänge verdünnte Lösungen dieser Prozessbäder, die normalerweise einer Abwasserbehandlung zugeführt werden müssen. Bekannte Beispiele sind die Galvanotecknik, Phototechnik (Entwickler- und Fixierprozesse), Textilfärberei, Batterieherstellung, Spiegelherstellung, Beizerei und andere. Hierbei können die Lösungen entweder nur Verdünnungen der Prozessbäder oder auch Abbauprodukte des im Bad stattfindenden Prozesses sein.

Rieseltürme sind aus Anlagen zur Meerwasserentsalzung bekannt.

In abgewandelter Form werden solche Rieseltürme als Prozeßsäulen zur Aufbereitung von Prozessbädern eingesetzt.

Aus der Praxis sind ähnliche Vorrichtungen bekannt, bei welchen die Einzelkomponenten aus Materialien bestehen, welche gegen aggressive Stoffe nicht ausreichend resistent sind und nach relativ kurzer Zeit davon unbrauchbar oder zerstört werden.

Weitere bekannte Vorrichtungen sind bis heute nur in wenigen grösseren Produktionsbetrieben eingesetzt und dienen z.B. zur Rückgewinnung von Elektrolyten aus Spülwässern durch Wasserverdunstung, wobei auch Spülwasser mit relativ hohem Tensidgehalt zum Teil ohne störendes Schäumen aufkonzentriert werden können.

Ausgehend davon ist es Aufgabe der Neuerung, eine Vorrichtung zu schaffen, mit welcher auch hochaggressive Lösungen von Prozessbädern (z.B. Chromsäure) ohne Gefahr einer Materialzerstörung und auch bei möglichst niedriger Temperatur durch Verdampfung so weit aufkonzentriert werden können, dass sie (eventuell nach weiterer Vorbehandlung) wieder als Prozessbad oder einer Beseitigung zuführbar sind.

Zur Lösung der gestellten Aufgabe sind neuerungsgemäss die kennzeichnenden Merkmale von Anspruch 1 vorgesehen. Vorteilhafte Weiterbildungen ergeben sich aus den Unteransprüchen.

Der Vorteil der Neuerung besteht darin, dass durch Verwendung eines gegen aggressive Stoffe weitgehend resistenten Materials bzw. Werkstoffs (z.B. PVCNL _modifiziertes Polyvinylchlorid_) für die einzelnen Komponenten praktisch jegliche Arten von Prozessbädern aufkonzentriert werden können. Ferner schliesst die im Rieselturm unterhalb einer Temperatur von ca. $80^{\circ}$ C, vorzugsweise unterhalb ca. $60^{\circ}$ C nach dem Verdampfungsprinzip stattfindere Verdampfung eine thermische Zerstörung organischer Inhaltsstoffe aus und es sind damit ideale Voraussetzungen für die Nutzung von Abwärme im niedrigen Temperaturniveau gegeben. Vorteilhaft ist dabei, dass der Rieselturm bei normalen atmosphärischen Bedingungen arbeitet.

**0142603**

Ein in einem Vorlagebehälter unterhalb des Rieselturmes vorgewärmtes lagerndes und aufzubereitendes Prozessbad wird durch eine Pumpe über eine Leitung in einen im oberen Teil des Rieselturmes angeordneten behälter- oder wannenförmig ausgestalteten Rieselboden gepumpt und darin verteilt. Von hier tropft das Prozessbad aus kleinen Bohrungen, welche an der Unterfläche des Rieselbodens angeordnet sind, auf darunter im Rieselturm eingelagerte handelsübliche Füllkörper. Die Füllkörper sind, um ihre Oberfläche zu vergrössern, mit zahlreichen Flächen versehen, worauf sich das vom Rieselboden abtropfende Prozessbad verteilt. In der unteren Hälfte des Rieselturmes ist eine Lochplatte angeordnet, auf die sich die Füllkörper abstützen. Das Prozessbad läuft, bedingt durch die Schwerkraft, von oben nach unten über die Flächen der Füllkörper. Während dieses Durchlaufs wird ein von einem ausserhalb des Rieselturmes befindlichen Gebläse über einen unterhalb der Lochplatte mündenden Lufteinlauf Luft eingeblasen. Die Luft strömt dabei nach oben, wobei sie das über die Flächen der Füllkörper herabrieselnde Prozessbad berührt und diesem Flüssigkeit durch den dabei entstehenden Verdampfungsprozess entzieht. Je tiefer das von oben nach unten über die Füllkörper rieselnde Prozessbad gelangt, um so mehr erhöht sich ihre Konzentration, wobei diese an der Lochplatte ein Maximum erreicht. Das so aufkonzentrierte Prozessbad fällt dann durch die in der Lochplatte vorgesehenen Öffnungen auf einen darunter angeordneten Schräg-

0142603

boden, von welchem es in eine tiefer gelegene sumpfartige Stelle abläuft und gesammelt wird. Von hier läuft das Konzentrat über eine Ablaufleitung durch Schwerkraft in einen darunter angeordneten Konzentratbehälter. Dieser ist vom Vorlagebehälter durch eine Wand getrennt. Ein in der Wand angeordneter Überlauf verbindet beide Behältnisse, wodurch einerseits ein Überlauf im Konzentratbehälter verhindert und andererseits eine eventuell erwünschte Erhöhung der Aufkonzentrierung ermöglicht wird. Der Vorlagebehälter ist mit einem Wärmetauscher und/oder Tauchbaderwärmer sowie mit einem Schwimmerschalter, Temperatur-Schutzschalter und Temperaturregler versehen. Damit können Temperatur und Spiegel des Prozessbades kontrolliert und geregelt werden.

Die vom Gebläse durch den Rieselturm strömende und durch die Verdampfung angereicherte Luft strömt durch die darin neben den kleinen Bohrungen angeordneten, nach oben führende Rohrstutzen grösseren Durchmessers und einem darüber angeordneten, aus einem Kunststoff oder Edelstahlgeflecht bestehenden Demister ins Freie.

Ein Ausführungsbeispiel ist folgend beschrieben und durch Skizzen erläutert.

Es zeigen:

Figur 1 eine aus Rieselturm und Behältnis bestehende Vorrichtung zur Aufkonzentrierung,

/6

- 6 -

0142603

Figur 2   einen Füllkörper gemäss Figur 1.

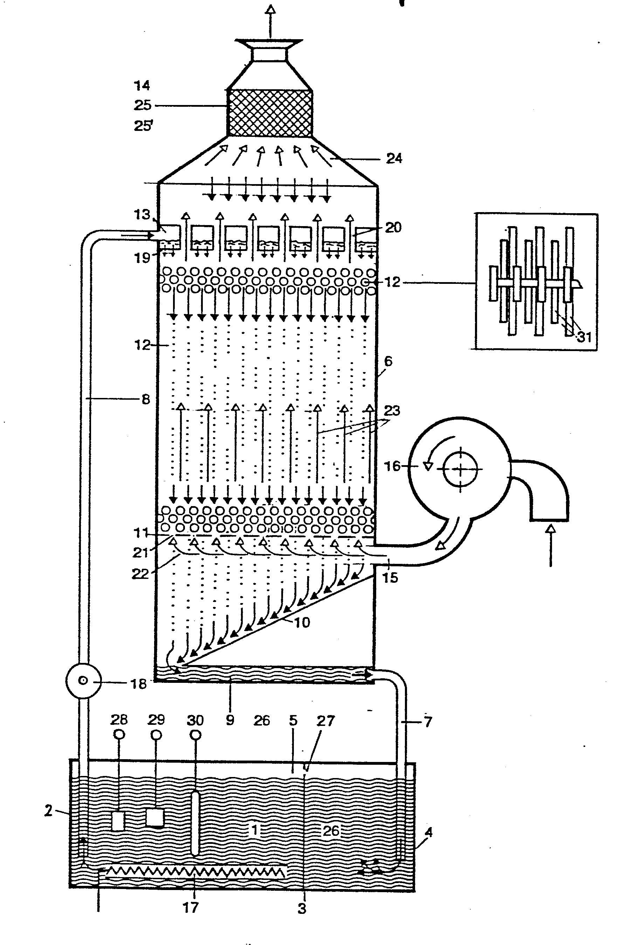

Aus Figur 1 ist der prinzipielle Aufbau einer Vorrichtung zur Aufkonzentrierung von Prozessbädern ersichtlich. Über einem, aus mit einem Prozessbad 1 gefüllten Vorlagebehälter 2 und einem von einer Wand 3 davon getrennten Konzentratbehälter 4 bestehenden Behältnis 5 ist ein Rieselturm 6 angeordnet, welcher durch Leitungen 7 und 8 mit dem Behältnis 5 verbunden ist. Im Rieselturm 6 sind in der Reihenfolge von unten nach oben angeordnet: ein Konzentratsumpf 9, ein Schrägboden 10, eine Lochplatte 11, Füllkörper 12, ein Rieselboden 13 und ein Demister 14. Zwischen dem Schrägboden 10 und der Lochplatte 11 mündet in den Rieselturm 6 ein Lufteinlauf 15, welcher mit einem ausserhalb des Rieselturms 6 liegenden Gebläses 16 verbunden ist. Der Konzentratsumpf ist durch die Leitung 7 mit dem Konzentratbehälter 4 und der benachbarte Vorlagebehälter 2 durch die Leitung 8 mit dem Rieselboden 13 verbunden. Das Prozessbad 1 wird von einem am Boden des Vorlagebehälters 2 angeordneten Wärmetauscher oder einer Heizung 17 auf z.B. eine Temperatur von ca. 50$^{\circ}$ C erwärmt und über die Leitung 8 durch eine darin wirkende Pumpe 18 in den behälter- oder wannenförmig ausgestalteten und auswechselbar installierten Rieselboden 13 gefördert. Der Rieselboden 13 weist auf seiner Unterfläche kleine Bohrungen 19 und nach oben führende Rohrstutzen 20 auf. Das in den Rieselboden 13 geförderte Prozessbad 1 tropft aus den Bohrungen 19 auf die

/7

darunter lagernden Füllkörper 12 und rieselt an deren besonders grossen spezifischen Oberfläche entlang nach unten bis zur Lochplatte 11 (siehe Pfeile).

Während des Rieselvorgangs entlang der Oberflächen der Füllkörper 12 wird durch den vom Gebläse 16 angesaugten (siehe Pfeil) und erzeugten und über den Lufteinlauf 15 gegen die Unterseite der Lochplatte 11 und durch dessen Öffnungen 21 wirkenden Luftstrom 22 und dadurch eingeleiteten Verdampfungsprozess dem Prozessbad 1 Flüssigkeit entzogen. Der damit angereicherte Luftstrom 23 strömt durch die im Rieselboden 13 dazu vorgesehenen Rohrstutzen 20 in einen Entspannungs- und Kondensationsraum 24 und durch den darüber angeordneten Demister 14 ins Freie (siehe Pfeile). Der Demister 14 ist zur Abscheidung der kondensierten Flüssigkeit, welche in den Rieselboden 13 zurücktropft (siehe Pfeile), mit einem Kunststoffgeflecht 25 ausgelegt. Statt dem Kunststoffgeflecht ist auch, je nach Prozessbad, ein Edelstahlgeflecht verwendbar.

Das an der Lochplatte 11 aufkonzentrierte Prozessbad 1 tropft durch die Öffnungen 21 auf den darunter angeordneten Schrägboden 10 (siehe Pfeile) und läuft von diesem in den darunter befindlichen Konzentratsumpf 9, aus welchem das Konzentrat 26 durch die Leitung 7 in den Konzentratbehälter 4 abläuft. Erreicht das hierin aufgefangene Konzentrat 26 einen in der Wand 3 vorgesehenen Überlauf 27, so fliesst es in den Vorlagebehälter 2 und vermischt sich mit dem darin enthaltenen Prozessbad 1; dies ist vorgesehen, um eine eventuelle Steigerung des Konzentrats zu erreichen. Im anderen Fall wird das in dem Konzentratbehälter 4 aufgefangene Konzentrat 26 dem Recycling zugeführt (Galvanik, Phototechnik, Textiltechnik und andere). Im benachbarten Vorlagebehälter 2 sind neben dem Wärmetauscher oder Heizung 17 noch ein Schwimmerschalter 28, Temperatur-Schutzschalter 29 und ein Temperaturregler 30 vorgesehen. Damit können der Spiegel des Prozessbades 1 und seine Temperatur überwacht und geregelt werden.

In Figur 2 ist ein Füllkörper 12 vergrössert dargestellt. Durch die darauf angeordneten rippenartigen Stege 31 wird eine sehr grosse spezifische Oberflächenvergrösserung erzielt, wodurch die Flüssigkeitsaufnahme der vorbeiströmenden Luft (siehe Figur 1) während des Verdampfungsprozesses wesentlich erhöht wird und die Aufkonzentrierung des Prozessbades nicht nur beschleunigt, sondern gleichzeitig erhöht wird. Die Füllkörper sind handelsüblich und in unterschiedlicher Oberflächengestaltung ausgeführt.

Die Verwendung eines weitgehend gegen aggressive Stoffe und Lösungen resistenten Werkstoffes für alle Komponenten der Rieselvorrichtung gewährleistet eine praktisch unbegrenzte Lebensdauer. Die Vorrichtung ist dadurch gewichtsmässig leicht und kann als kostensparend, kompakte Bauweise ausgeführt werden, wodurch sie auch für mittlere bis kleine Betriebe einsetzbar wird.

Die Vorrichtung ist beispielsweise zur Aufkonzentrierung folgender wässriger Lösungen einsetzbar:

| Lösung | | maximale Konzentration |
|---|---|---|
| Chromsäure-Elektrolyt | $CrO_3$ | 450 g/L |
| Schwefelsäure | $H_2SO_4$ | 4 g/L |
| Hexafluoro-Kieselsäure | $H_2SiF_6$ | 4 g/L |
| Kadmium-Elektrolyt (cyanidisch) | Cd | 30 g/L |
| Natrimzyanid | NaCN | 90 g/L |
| Natriumhydroxid | NaOH | 15 g/L |
| Kadmiumsulfat-Elektrolyt (sauer) | $CdSO_4$ | 50 g/L |
| Schwefelsäure | $H_2SO_4$ | 50 g/L |
| Nickelsulfat-Hexahydrat-Elektrolyt (Watts Bad) | $NiSO_4 \cdot 6H_2O$ | 300 g/L |
| Nickelchlorid-Hexahydrat | $NiCl_2 \cdot 6H_2O$ | 40 g/L |
| Borsäure | $HBO_3$ | |

29.07.1983
Kr/Sz

0142603

DORNIER SYSTEM GMBH

7990 Friedrichshafen

Reg. S 451 Gm

S c h u t z a n s p r ü c h e :

1. Vorrichtung zur Aufkonzentrierung von wässrigen Lösungen aus Galvanotechnik, Phototechnik und anderen Produktionsprozessen als Prozeßstufen zum Recycling oder
zur Rückstandsbeseitigung, bestehend aus einem Rieselturm mit einem in seiner oberen Hälfte angeordneten
Rieselboden, einem darüber angeordneten Demister, einer
in seiner unteren Hälfte angeordneten Lochplatte, einem
darunter angeordneten Schrägboden, zwischen Rieselboden
und Schrägboden eingelagerten Füllkörpern, einem ausserhalb des Rieselturmes befindlichen Gebläse mit zwischen
Lochplatte und Schrägboden angeordneten Lufteinlauf und
einem unterhalb des Rieselturmes angeordneten in einen
Vorlagebehälter und einen Konzentratbehälder unterteilten Behältnis, einer Leitung vom Schrägboden zum Konzentratbehälter und einer Leitung mit Pumpe vom Vorlagebehälter zum Rieselboden, d a d u r c h   g e k e n n -

/2

z e i c h n e t , dass Rieselturm (6), Füllkörper (12),
Rieselboden (13), Lochplatte (11), Schrägboden (10),
Behältnis (5) und Leitungen (7, 8) aus einem gegen
aggressiv wirkende Stoffe (z.B. Chromsäure) für Temperaturen bis ca. 80$^O$ C resistentem Material bestehen.

2. Vorrichtung nach Anspruch 1, dadurch gekennzeichnet,
dass Rieselturm (6), Rieselboden (13), Lochplatte (11),
Schrägboden (10), Behältnis (5) und Leitungen (7, 8)
aus modifizierten Polyvinylchlorid (PVCNL) bestehen.

3. Vorrichtung nach den Ansprüchen 1 und 2, dadurch gekennzeichnet, dass der Rieselboden (13) an seiner den
Füllkörpern (12) zugekehrten Fläche Bohrungen mit zwei
verschiedenen Durchmessern aufweist, wovon die Bohrungen mit dem grösseren Durchmesser gegen die mit kleinerem Durchmesser (19) durch nach oben führende Rohrstutzen (20) abgegrenzt sind.

4. Vorrichtung nach den Ansprüchen 1 bis 3, dadurch gekennzeichnet, dass der Rieselboden (13) als ein in den
Rieselturm (6) einsetzbarer Behälter ausgebildet ist.

5. Vorrichtung nach einem der Ansprüche 1 bis 4, dadurch
gekennzeichnet, dass die Füllkörper (12) eine grosse
spezifische Oberfläche aufweisen.

6. Vorrichtung nach einem der Ansprüche 1 bis 5, dadurch gekennzeichnet, dass der Vorlagebehälter (2) mit einem Wärmetauscher oder einer Tauchbadheizung (17) sowie mit einem Schwimmerschalter (28), Temperatur-Schutzschalter (29) und Temperaturregler (30) versehen ist.

7. Vorrichtung nach einem der Ansprüche 1 bis 6, dadurch gekennzeichnet, dass der Demister (14) aus einem Kunststoffgeflecht (25) besteht.

8. Vorrichtung nach einem der Ansprüche 1 bis 7, dadurch gekennzeichnet, dass der Demister (14) aus einem Edelstahlgeflecht (25') besteht.

9. Vorrichtung nach den Ansprüchen 1 bis 8, dadurch gekennzeichnet, dass der Rieselturm (6) unter normalen atmosphärischen Bedingungen arbeitet.

29.07.1983
Kr/Sz

Europäisches
Patentamt

**EUROPÄISCHER RECHERCHENBERICHT**

Nummer der Anmeldung

EP 84 10 6552

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 086 259 (KUREHA KAGAKU KOGYO K.K.) * Seite 1, Zeilen 38-46; Seite 2, Zeilen 29-40 * | 1,2 | B 01 D .1/30 |
| X | US-A-4 233 265 (K.E. GASPER) * Spalte 2, Zeilen 17-24; Anspruch 3 * | 1,2 | |
| A | FR-A-2 289 228 (VOP) * Seite 3, Zeile 35 - Seite 6, Zeile 20; Figur 1 * | 1 | |
| A | DE-A-2 658 509 (WAP ENG.) * Anspruch 2; Figur 1 * | 1,5 | |
| A | DE-A-2 231 855 (ENVIRONEERING INC.) * Figur 1 * | 1 | RECHERCHIERTE SACHGEBIETE (Int. Cl.4) B 01 D |
| A | DE-B-1 234 688 (F. UHDE) * Spalte 4; Figuren * | 3 | |
| A | FR-A-1 217 808 (ATELIERS ET CHANTIERS DE BRETAGNE) * Seite 2, rechte Spalte * | 7,8 | |
| A | DE-A-2 448 884 (G. WEISHEIT) * Figuren * | 6 | |

Der vorliegende Recherchenbericht wurde für alle Patentansprüche erstellt.

| Recherchenort DEN HAAG | Abschlußdatum der Recherche 17-12-1984 | Prüfer VAN BELLEGHEM W.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82